Europäisches Patentamt

European Patent Office

Office européen des brevets

(11) Publication number: **0 027 946**
**A1**

## (12) EUROPEAN PATENT APPLICATION

(21) Application number: **80106227.4**

(22) Date of filing: **13.10.80**

(51) Int. Cl.³: **G 02 B 23/08**

(30) Priority: **29.10.79 US 89064**

(43) Date of publication of application: **06.05.81**
**Bulletin 81/18**

(84) Designated Contracting States: **DE FR GB IT NL**

(71) Applicant: **CARRIER CORPORATION, Carrier Tower P.O. Box 4800, Syracuse New York (US)**

(72) Inventor: **Geary Jr., Carl H., 622 Westland Drive, Greensburgh, Pennsylvania (US)**

(74) Representative: **Baillie, Iain Cameron et al, c/o Ladas & Parry Blumenstrasse 48, D-8000 München 2 (DE)**

(54) Turbomachine blade wear monitoring system.

(57) System including a light (26) for illuminating at least one blade (16) on a selected stage (12) of the turbomachine (10). An image of the illuminated blade is generated and transmitted to a receiver (22) preferably located at a remote station whereat the image of the illuminated blade is displayed.

-1-


## Turbomachine Blade Wear Monitoring System

This invention relates to a system for monitoring turbomachine blade wear, and in particular to a system particularly suitable for enabling an operator to monitor blade wear at a station remote from the turbomachine.

In recent years, it has become desirable to employ turbomachines such as gas expanders, in relatively harsh environments. That is, the motivating fluid furnished to the turbomachine may be a "relatively dirty" gas containing much particulate matter. The particulate matter will cause erosion or other undesirable wear of the blades of the turbomachine.

As an example, gas expanders have been employed in association with fluid catalytic cracking processes (hereinafter F.C.C. process) employed by the petroleum industry. The gas expanders have been used to recover energy from waste heat gas streams. In particular, the expander receives a waste heat gas generated within a regenerator of the F.C.C. process, whereby the waste heat gas functions as a motivating fluid for the expander. The expansion of the gas through the expander results in the generation of usable power. Similarly, expanders are used in coal gasification and analogous processes for recovering energy.

Generally, gas expanders of the foregoing type are located in positions which discourage constant monitoring by operating personnel. Although, particulate matter separators are employed "upstream" of the expander, not all the particulate matter is removed. Further, the separator may become inoperative, or the process conditions may change, allowing large quantities of particulate matter to pass into the turbomachine. Impingement of the matter on the rotating blades will cause blade erosion. Erosion is generally a function of the quantity and size of the particulate matter impinging on the blades. In multi-stage expanders, the blades mounted on the stage with the highest operating load will be subjected to the greatest degree of erosion. Further, the trailing edge of the blade, as the thinnest portion thereof, is susceptible to the most significant erosion damage.

Even with operating separators, blades will constantly be undergoing erosion, with the rate of erosion sometimes increasing substantially due to changes in operating conditions of the F.C.C. process. If blade wear due to erosion is not adequately monitored, one or more of the blades may fail causing severe and in some circumstances catastrophic events.

In addition to the foregoing, turbomachines such as steam turbines, may have blade failures due to carryover of moisture in the motivating fluid. In particular, moisture contained within the motivating fluid will impinge upon the blades of the turbomachine stages and wear same.

Accordingly, it is an object of this invention to monitor the blades of a turbomachine for wear to prevent failure of such blades.

It is another object of this invention to enable operating personnel to monitor blade wear on a continuous basis.

It is a further object of this invention to monitor the blades of a turbomachine by transmitting an image of at least one of the blades to a viewing station located at a point remote from the turbomachine.

It is yet another object of this invention to generate an image of one of the blades and display the image to determine wear of the blade.

It is yet another object of this invention to record the image for future reference.

These and other objects of the present invention are attained in a method of monitoring turbomachine blade wear comprising the steps of illuminating at least one blade on a selected stage of the turbomachine; transmitting an image of the illuminated blade to a viewing station; and observing the image of the blade transmitted to the viewing station.

The present invention further includes a turbomachine blade wear monitoring system comprising light means for illuminating at least one blade on a selected stage of the turbomachine; image generating means for generating an image of the illuminated blade; transmitting means for transmitting the image of the illuminated blade; and receiving means for receiving and displaying the image of the illuminated blade.

Figure 1 is a longitudinal sectional view of a turbomachine including the monitoring system of the present invention; and

Figure 2 is a sectional view taken along line II-II of Figure 1.

Referring now to the two figures of the drawing, there is disclosed a preferred embodiment of the present invention. In particular, there is disclosed a turbomachine 10 having at least one rotating stage 12 mounted on a shaft 14. Stage 12 includes rotating blades 16. The turbomachine further includes an exhaust casing 18.

In the preferred embodiment, turbomachine 10 is a gas expander operable to receive a waste heat fluid generated in a process such as an F.C.C. process, with the expansion of the waste heat fluid through turbomachine 10 resulting in generation of usable power.

As discussed previsouly, the waste heat fluid may have particulate matter entrained therein. The particulate matter will cause erosion of blades 16 of the turbomachine. The rate of erosion of the blades is a direct function of the quantity of particulate matter entrained within the gaseous motivating fluid stream. Generally, separators are employed upstream of the turbomachine inlet; however, the separators are not always effective in eliminating all the particulate matter entrained within the gaseous stream. Further, process conditions may change whereby the separator may not be capable of handling a substantially increased quantity of particulate matter.

It is extremely important that erosion of the blades be monitored on a continuing basis. However, due to the harsh environment in which the turbomachine is placed, operating personnel may be unable or unwilling to monitor the blades on a continuing basis.

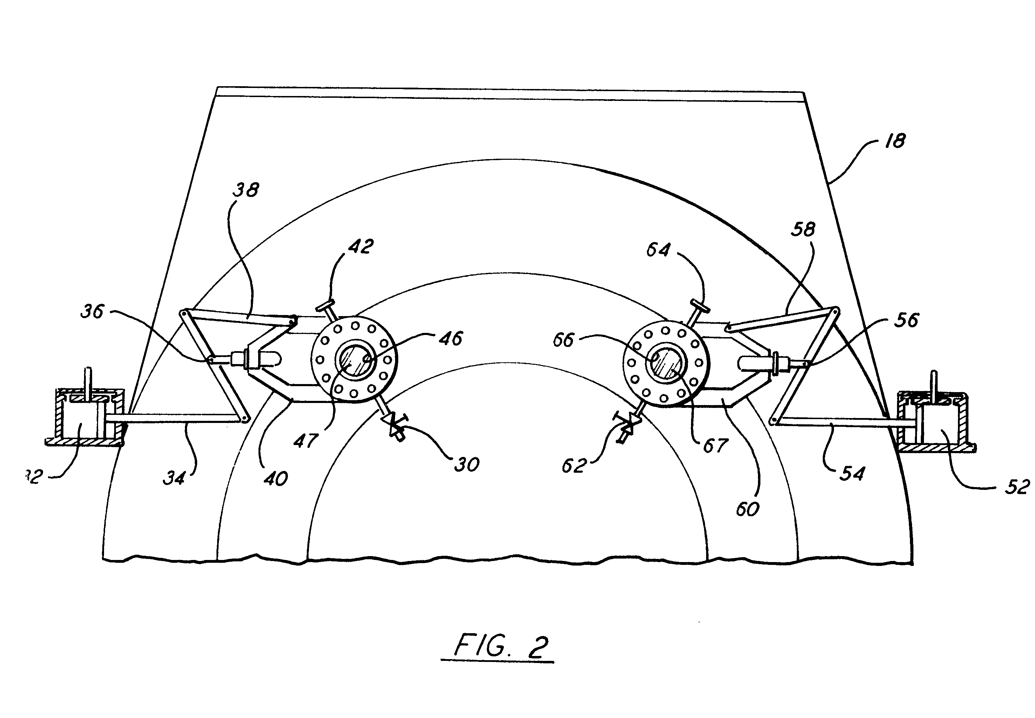

To enable operating personnel to monitor the wear of blades 16, preferably while remaining in a relatively comfortable control room, turbomachine 10 is provided with a pair of ports 46 and 66 as shown in Figure 2. Ports 46 and 66 are covered by glass members 47 and 67 respectively. Valve 40 and 60 respectively move relative to ports 46 and 66 to open or close the ports for viewing purposes. An operating mechanism 32 including levers 34 and 38 pivotably connected about point 36 is connected to valve 40. Similarly, an operating mechanism 52 having levers 54, 58 pivotably connected about point 56 is operatively connected to valve 60.

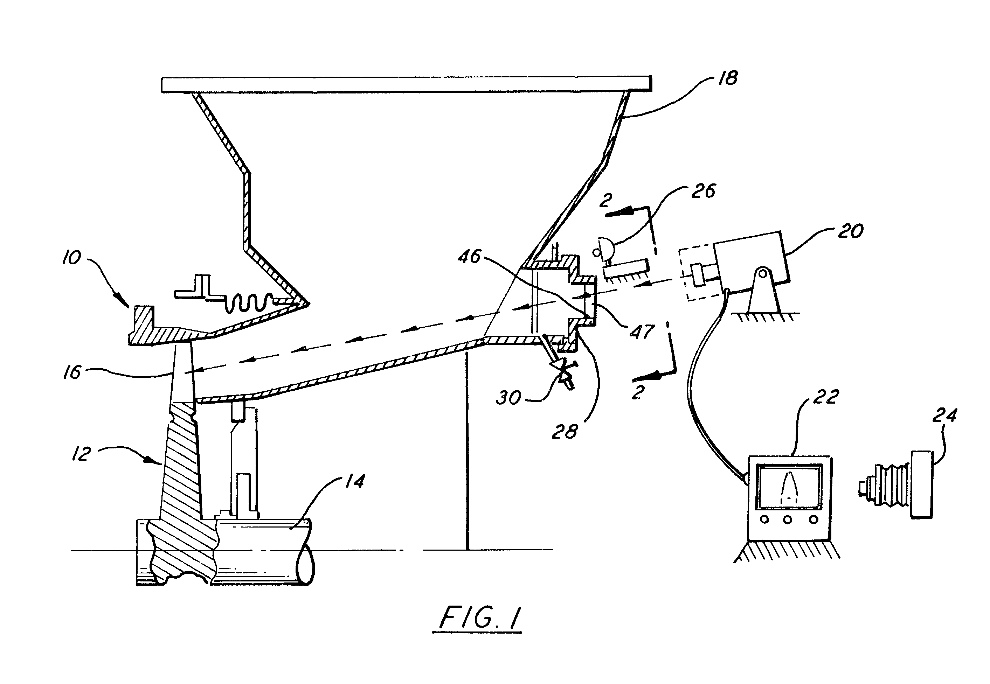

As shown in Figure 1, port 46 is provided in a housing section 48 attached to exhaust casing 18. A housing similar to housing 48 is provided for port 66. An image transmitting means such as television camera 20 is focused through glass 47 of port 46. Similarly, an illuminating means such as strobe light 26 is focused through glass 67 of port 66. Television camera 20 transmits an image to television receiver 22. A recording device such as a camera 24 may be located adjacent television receiver 22 for permanently recording the image displayed by the receiver.

If desired, housing 48 may include a conduit 42 for delivering a high pressure fluid, such as air into the sealed housing section for pressurizing the section to prevent particulate matter from damaging glass 47 or in turn the optics of television camera 20. Further, a purge valve 30 may be provided to eliminate any particulate matter that may have gained access to the pressurized housing section.

In operation, an operator located within a control room housing television receiver can activate camera 20 by providing a remote control signal, preferably electrical, when it is desired to monitor the condition of blade 16. The electrical signal can be further used to change the type of image transmitted by the camera. For example image resolution may be altered, as well as image magnification. When camera 20 is activated an additional signal should simultaneously activate illuminating means 26. As indicated previously, illuminating means 26 is preferably a strobe light having a pulse synchronized with the rotational speed of stage 12 so that only a single blade on the stage is illuminated at any one time. Generally, since the rate of erosion of the blades on a particular stage is relatively equal, observation of a single blade during any one monitoring sequence will be sufficient to monitor the condition of the blades on an entire stage. If blade erosion is not equal about the stage, operating vibrations will occur to alert operating personnel of potential problems. Alternatively, the pulsing of the strobe light may be at an interval of one R.P.M. less than the R.P.M. of the rotor, whereby all the blades on the stage will slowly rotate before the camera.

A remote signal will also move valves 40 and 60 to actuate operating mechanisms 32 and 52 to uncover ports 46 and 66 respectively. With illuminating means 26 activated and the ports 46 and 66 uncovered, camera 20 will transmit an image of the illuminated blade to television receiver 22 whereat the image will be displayed.

Operating personnel monitoring receiver 22 can study the image of the blade displayed at the receiver to determine the condition of the blade. If significant erosion of the blade has occurred so that the blade may fail, the turbomachine may be rapidly stopped.

A recording device such as camera 24 or video recorder may be used to record the image of the blade displayed at receiver 22. It may be useful to have a recorded image for comparison from one point in time to another to determine the rate of erosion under specific operating conditions.

The present inventions provide a system that enables operating personnel to readily and conveniently monitor the condition of a blade of a turbomachine.

While a preferred embodiment of the present invention has been described and illustrated, the invention should not be limited thereto but may be otherwise embodied within the scope of the following claims.

## Claims

1.   A method of monitoring turbomachine blade wear comprising the steps of illuminating at least one blade on a selected stage of the turbomachine; transmitting an image of the illuminated blade to a viewing station; and observing the image of the blade transmitted to the viewing station.

2.   A method in accordance with claim 1 further including the step of recording the image of the blade for further observation.

3.   A turbomachine blade wear monitoring system characterized by light means (26) for illuminating at least one blade on a selected stage of said turbomachine; image generating means for generating an image of the illuminated blade; transmitting means (20) for transmitting the image of the illuminated blade; and receiving means (22) for receiving and displaying the image of the illuminated blade.

4.   A turbomachine blade wear monitoring system in accordance with claim 3 further including recording means for preserving the image of the blade.

5.   A turbomachine blade wear monitoring system in accordance with claims 3 or 4 wherein said light means includes a strobe light having activating means for pulsing the strobe light in a substantial synchronization with the rotating stage.

6.   A turbomachine blade wear monitoring system in accordance with claim 5 wherein said image generating means includes a television camera.

7.   A turbomachine blade wear monitoring system in accordance with claim 6 wherein said receiving means includes a television receiver.

0027946

*FIG.1*

*FIG. 2*

European Patent Office

**EUROPEAN SEARCH REPORT**

0027946
Application number

EP 80 10 6227

## DOCUMENTS CONSIDERED TO BE RELEVANT

| Category | Citation of document with indication, where appropriate, of relevant passages | Relevant to claim |
|---|---|---|
| X | AIRCRAFT ENGINEERING, vol. 46, no. 11, November 1974, page 19 London, G.B. "Endoscope television equipment" -- | 1-4,6, 7 |
| A | US - A - 4 092 537 (ROLLS-ROYCE) | |
| A | GB - A - 1 303 064 (ROLLS-ROYCE) | |
| A | US - A - 3 848 961 (CHAMPEAU) | |
| A | GB - A - 963 595 (ROLLS-ROYCE) | |
| A | US - A - 3 623 368 (DECKER) | |
| E,A | GB - A - 2 036 999 (ROLLS-ROYCE) ---- | |

**CLASSIFICATION OF THE APPLICATION (Int. Cl.3)**

G 02 B 23/08

**TECHNICAL FIELDS SEARCHED (Int. Cl.3)**

F 01 D
G 02 B
G 01 B

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 21-01-1981 | IVERUS |

EPO Form 1503.1   06.78